(19) Europäisches Patentamt
European Patent Office
Office européen des brevets

(11) **EP 2 659 114 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(21) Anmeldenummer: **11794638.4**

(22) Anmeldetag: **24.11.2011**

(51) Int Cl.:
*F02D 41/00* *(2006.01)*    *F02D 13/02* *(2006.01)*

(86) Internationale Anmeldenummer:
**PCT/EP2011/005903**

(87) Internationale Veröffentlichungsnummer:
**WO 2012/089293 (05.07.2012 Gazette 2012/27)**

(54) **VERFAHREN UND VORRICHTUNG ZUR STEUERUNG EINES VERBRENNUNGSMOTORS**

METHOD AND DEVICE FOR CONTROLLING AN INTERNAL COMBUSTION ENGINE

PROCÉDÉ ET DISPOSITIF DE COMMANDE D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2010 DE 102010064344**

(43) Veröffentlichungstag der Anmeldung:
**06.11.2013 Patentblatt 2013/45**

(73) Patentinhaber: **Volkswagen Aktiengesellschaft 38436 Wolfsburg (DE)**

(72) Erfinder: **SCHER, Uwe 38162 Cremlingen/Destedt (DE)**

(56) Entgegenhaltungen:
EP-A1- 1 447 548      EP-A2- 2 031 216
WO-A1-2006/066739    DE-A1-102004 018 489
DE-T2- 60 301 052     FR-A1- 2 864 580

**Beschreibung**

Die vorliegende Erfindung betrifft ein Verfahren zur Steuerung eines Dieselmotors, z.B. ein Dieselmotor in einem Antriebsstrang eines Kraftfahrzeugs, sowie eine entsprechend ausgestaltete Vorrichtung.

In dem Antriebsstrang eines Kraftfahrzeugs können verschiedenartige Verbrennungsmotoren zum Einsatz kommen, z.B. Ottomotoren oder Dieselmotoren. Der Verbrennungsmotor ermöglicht hierbei, durch Verbrennung eines Kraftstoffs gewonnene Energie zum Antrieb des Kraftfahrzeugs zu nutzen. Beispiele von Verbrennungsmotoren sind Ottomotoren, welche mit Benzin betrieben werden, sowie Dieselmotoren, welche mit Dieselkraftstoff betrieben werden.

Um einen effizienten Betrieb des Verbrennungsmotors zu gewährleisten, können verschiedene Arten von Steuerungen zum Einsatz kommen.

Die DE 10 2008 001 992 A1 beschreibt ein Verfahren zur Steuerung des Einspritzvorgangs bei einem Dieselmotor, durch welches ein verringerter Schadstoffausstoß in Form von Rußpartikeln erreicht werden kann. Das Verfahren basiert auf einer Anpassung des Verbrennungsverlaufs über den Einspritzdruck.

Aus der DE 3930396 A1, der JP 60019943 A und der JP 60032961 A sind jeweils Verfahren bekannt, bei welchen der Verbrennungsverlauf über die Menge des eingespritzten Kraftstoffs angepasst wird.

Aus der DE 10249755 A1, der DE 10344423 A1, der DE 10344428 A1 und der DE 10 2007 052 615 A1 sind Verfahren bekannt, bei welchen der Verbrennungsverlauf über eine Aufteilung des Einspritzvorgangs in eine Voreinspritzung und Haupteinspritzung bzw. in eine Haupteinspritzung und eine Nacheinspritzung erreicht wird.

Aus der DE 10 2008 004 361 A1 ist es bekannt, den Verbrennungsverlauf eines selbstzündenden Ottomotors über die Auswertung verschiedener Verbrennungslagemerkmale anzupassen. Bei den Verbrennungslagemerkmalen kann es sich beispielsweise um die Lage des maximalen Verbrennungsdrucks, die Lage der 50%-Energieumsetzung oder dergleichen handeln. Als Stellgröße können auch Schließzeitpunkte eines Ein- oder Auslassventils gesteuert werden.

Aus der DE 10 2008 026 323 A1 ist ein Verfahren für eine variable Rückschubregelung für einen Hubkolbenmotor mit variablen Ventiltrieben bekannt. Hierbei kann die variable Ventilsteuerung abhängig von einem Betriebszustand des Hubkolbenmotors erfolgen.

Die DE 103 48 366 A1 beschreibt ein Verfahren zum Betreiben einer direkteinspritzenden Diesel-Brennkraftmaschine, bei welchem Öffnungs- und Schließzeitpunkte eines Einlassventils abhängig von Motorbetriebsbereichen gesteuert werden können.

Die WO 2006/049749 A1 beschreibt eine Luftmanagementstrategie für einen selbstzündenden Verbrennungsmotor, bei welcher eine variable Ventilsteuerung eines Einlassventils vorgesehen ist, um eine gewünschte Brennraumtemperatur zu erreichen.

Die DE 10 2008 004 059 A1 beschreibt ein Verfahren zum Betreiben einer Brennkraftmaschine, bei welchem während eines Schubbetriebes der Schließzeitpunkt eines Einlassventils ausgehend von einem unteren Totpunkt der Bewegung eines Kolbens nach spät verschoben ist.

Die DE 603 01 052 T2 offenbart ein Verfahren, durch das ein nockenwellenloser Otto-Hubkolbenmotor möglichst genau durch eine Veränderung der Ventilsteuerzeiten (leistungs-)geregelt werden kann, wobei zur Einhaltung von Abgasgrenzwerten eine Berücksichtigung eines gemessenen $\lambda$-Werts erfolgt.

Die EP 2 031 216 A2 offenbart ein Verfahren zum Steuern einer Brennkraftmaschine, bei dem zur Absenkung eines relativ hohen Lambda-Werts des Abgases bei einer gleichbleibenden Menge an zugeführtem Kraftstoff zunächst die Menge an rückgeführtem Abgas erhöht und anschließend, da die Höhe des Anteils des rückführbarem Abgas begrenzt ist, eine Spätverstellung des Schließzeitpunkts der Einlassventile vorgenommen wird. Damit soll eine zyklusgenaue Kontrolle des aus der Abgasrückführung resultierenden Luftverhältnisses im Luftpfad möglich sein, was insbesondere im instationären Betrieb der Brennkraftmaschine für eine genaue und schnelle Dosierung bzw. Korrektur der rückgeführten Abgasmenge vorteilhaft sein soll.

Die WO 2006/066739 A1 offenbart ein Verfahren zum Betreiben einer Brennkraftmaschine, bei dem während eines Normalbetriebs eine Verdichtung der den Brennräumen zugeführten Luft mittels eines Verdichters eines Abgasturboladers erfolgt, während in einer Phase einer angeforderten Leistungssteigerung bzw. Beschleunigung die Luft zusätzlich mittels eines Zusatzverdichters, der insbesondere mechanisch, d.h. von einem Verbrennungsmotor der Brennkraftmaschine selbst, angetrieben ausgebildet sein kann. Mittels des Zusatzverdichters soll die Trägheit des Abgasturboladers dahingehend, einen erhöhten Ladedruck als Reaktion auf eine erhöhte Lastanforderung bereitzustellen, temporär kompensiert werden. Dadurch soll es möglich sein, auch erhebliche Lasterhöhungen mit relativ geringer Partikelbildung zu bewirken, da ein Absinken des Luftverhältnisses während dieser Phase der Leistungssteigerung unter einen Wert von $\lambda = 1,1$ verhindert werden kann.

Eine Aufgabe der vorliegenden Erfindung besteht darin, Verfahren sowie Vorrichtungen zur Steuerung eines Dieselmotors bereitzustellen, durch welche Schadstoffemissionen verringert werden können.

Erfindungsgemäß wird diese Aufgabe gelöst durch ein Verfahren gemäß Anspruch 1 sowie durch eine Vorrichtung gemäß Anspruch 7. Die abhängigen Ansprüche definieren bevorzugte oder vorteilhafte Ausführungsformen der Erfindung.

Bei der vorliegenden Erfindung wird bei der Steuerung eines Dieselmotors zunächst eine Füllmenge eines in einen Brennraum des Dieselmotors einzuspritzenden Kraftstoffs bestimmt. Dies geschieht in Abhängigkeit einer Lastanforderung. In Abhängigkeit der bestimmten Füllmenge wird eine für die Verbrennung bereitzustellende Luftmenge bestimmt, um einen Sollwert für ein Verhältnis der Luftmenge zu der Füllmenge des Kraftstoffs erreichen. Ein Schließzeitpunkt eines Einlassventils zur Zuführung von Luft in den Brennraum wird abhängig von der bestimmten Luftmenge gesteuert. Während eines Lastsprungs, der durch eine zunehmende Füllmenge des einzuspritzenden Kraftstoffs bei konstantem Ladedruck gekennzeichnet ist, wird der Soll-Wert für das Verhältnis der Luftmenge zu der Füllmenge durch ein Vergrößern des effektiven Hubraums konstant gehalten.

Bei einem Ausführungsbeispiel umfasst der Dieselmotor wenigstens einen Kolben, welcher in dem Brennraum zwischen einem oberen Totpunkt und einem unteren Totpunkt oszilliert. In diesem Fall kann ein Stellbereich für den Schließzeitpunkt nach einem unteren Totpunkt des Kolbens liegen. Alternativ kann der Stellbereich für den Schließzeitpunkt auch vor dem unteren Totpunkt des Kolbens liegen. In diesen Fällen kann bei einer Erhöhung der Füllmenge der Schließzeitpunkt des Einlassventils in Richtung des Zeitpunkts verlagert werden, an welchem der Kolben den unteren Totpunkt durchläuft. Hierdurch kann die bereitgestellte Luftmenge an die Füllmenge des Kraftstoffs angepasst werden. Auf diese Weise kann die Verbrennung auch bei Laständerungen mit einem geeigneten Verhältnis der Luftmenge zur der Füllmenge des Kraftstoffs erfolgen, bei welchem ein geringer Schadstoffausstoß, insbesondere ein geringer Rußausstoß, gewährleistet ist.

Gemäß einem Ausführungsbeispiel kann darüber hinaus Abgas in den Brennraum zurückgeführt werden. In diesem Fall kann die Steuerung des Schließzeitpunkts des Einlassventils ermöglichen, eine Rate der Rückführung des Abgases in den Brennraum im Wesentlichen konstant zu halten. Speziell kann die Rate der Rückführung des Abgases so gesteuert werden, dass sie bei einer Erhöhung der Füllmenge des Kraftstoffs nicht verringert, sondern vielmehr konstant bleibt oder erhöht wird.

Weiterhin werden eine Vorrichtung zur Steuerung eines Dieselmotors, welche zur Durchführen des erfindungsgemäßen Verfahrens ausgestaltet ist, sowie ein Kraftfahrzeug mit einer solchen Vorrichtung bereitgestellt.

Im Folgenden wird ein Ausführungsbeispiel der Erfindung anhand der beigefügten Zeichnungen näher erläutert.

Fig. 1 zeigt schematisch ein Kraftfahrzeug, dessen Antriebsstrang einen Dieselmotor umfasst, bei welchem die Steuerung eines Einlassventils gemäß einem Ausführungsbeispiel der Erfindung verwirklicht ist.

Fig. 2A und 2B zeigen schematisch verschiedene Positionen eines Kolbens des Dieselmotors.

Fig. 3 zeigt schematisch den Aufbau einer Vorrichtung zur Steuerung des Schließzeitpunkts des Einlassventils gemäß einem Ausführungsbeispiel der Erfindung.

Fig. 4 zeigt ein Flussdiagramm zur Veranschaulichung eines erfindungsgemäßen Verfahrens zur Steuerung des Schließzeitpunkts des Einlassventils.

Fig. 5 zeigt ein Diagramm zur Veranschaulichung der Wirkungsweise der Erfindung.

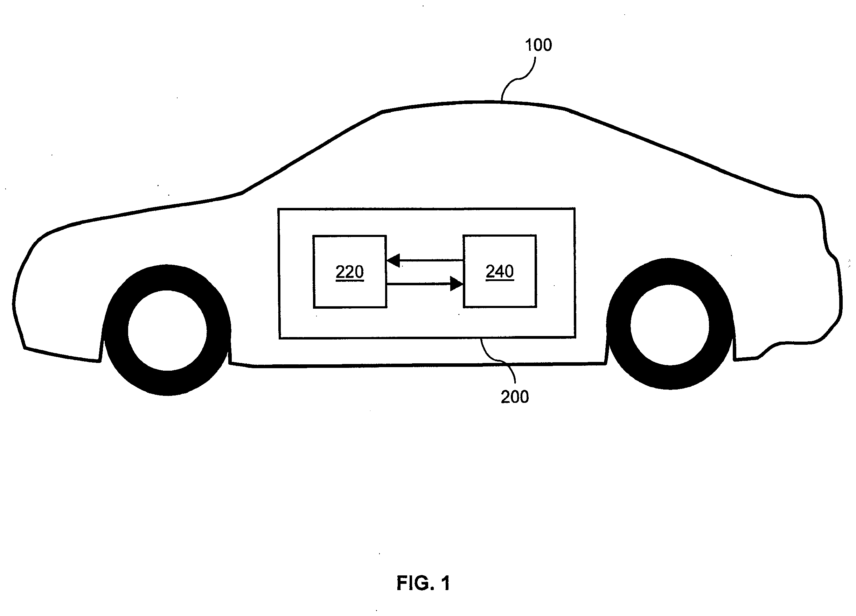

Die nachfolgende Beschreibung eines Ausführungsbeispiels bezieht sich auf die Steuerung eines Dieselmotors in einem Kraftfahrzeug 100. Fig. 1 veranschaulicht zur Erläuterung der Erfindung einige Komponenten des Kraftfahrzeugs 100. Insbesondere zeigt Fig. 1 einen Antriebsstrang 200 des Kraftfahrzeugs, welcher den Dieselmotor 220 sowie eine Motorsteuerung 240 umfasst.

Der Dieselmotor 220 des Antriebsstrangs 200 hat die Aufgabe, durch Verbrennung eines Kraftstoffs gewonnene Energie in mechanische Antriebsenergie zum Antrieb des Kraftfahrzeugs 100 umzusetzen. Der Dieselmotor 220 wird mit Kraftstoff in Form von Dieselkraftstoff betrieben. Dazu ist die Motorsteuerung 240 insbesondere dazu ausgestaltet, einen Einlassvorgang von Luft in einen Brennraum des Dieselmotors 220 zu steuern. Die nachfolgend beschriebenen Konzepte beruhen speziell auf der Steuerung eines Schließzeitpunkts eines Einlassventils zum Einlass der Luft in den Brennraum. Aufgrund des zyklischen Betriebs des Dieselmotors kann der Schließzeitpunkt auch über eine Phasenlage definiert werden. Neben dem Schließzeitpunkt kann die Motorsteuerung 240 selbstverständlich auch weitere Betriebsgrößen des Dieselmotors 220 steuern, z.B. die eingespritzte Kraftstoffmenge, Zeitpunkte zum Öffnen oder Schließen eines Auslassventils zum Auslassen von Verbrennungsprodukten aus dem Brennraum oder dergleichen. Die Motorsteuerung 240 ist bei dem dargestellten Ausführungsbeispiel im Wesentlichen elektronisch realisiert. Bei einigen Ausführungsbeispielen kann die Steuerung des Schließzeitpunkts des Einlassventils über einen hydraulischen Phasensteller erfolgen, welcher wiederum elektronisch gesteuert sein kann. Bei einigen Ausführungsbeispielen kann die Steuerung des Einlassventils und bevorzugt auch weiterer Ventile des Dieselmotors, z.B. von Einspritzventilen oder Auslassventilen, vollständig elektronisch realisiert sein. In diesem Fall kommen somit direkt elektronisch steuerbare Ventile zum Einsatz, z.B. elektromechanische Ventile. Eine vollständig elektronische Steuerung ermöglicht eine flexible Einstellbarkeit des Schließzeitpunkts des Einlassventils über einen großen Verstellbereich und mit einer schnellen Reaktionszeit.

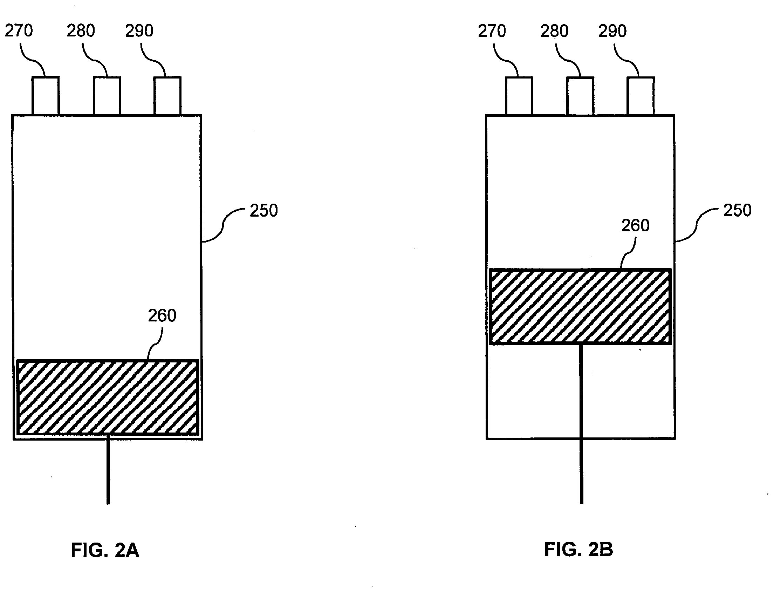

Fig. 2A und 2B veranschaulichen schematisch die Arbeitsweise des Dieselmotors 220. In Fig. 2A und 2B dargestellt ist der Brennraum 250, welcher im Wesentlichen zylinderförmig sein kann, sowie ein in dem Brennraum 250 beweglicher Kolben 260.

Weiterhin zeigen Fig. 2A und 2B verschiedene Ventile des Dieselmotors 220, insbesondere ein Einspritzventil 270, ein Einlassventil 280 und ein Abgasrückführungsventil 290. Über das Einspritzventil 270 wird der Kraftstoff in den Brennraum 250 eingespritzt. Das Einlassventil 280 dient der Zuführung von Luft in den Brennraum 250. Das Abgasrückführungsventil 290 dient der Rückführung von Abgasen in den Brennraum 250. Weiterhin umfasst der Dieselmotor 220 auch ein in Fig. 2A und 2B nicht dargestelltes Auslassventil zum Entlassen von Abgas aus dem Brennraum 250, welches dann teilweise über das Abgasrückführungsventil 290 in den Brennraum 250 zurückgeführt werden kann. Hierbei versteht es sich das die Luft mit Normaldruck bereitgestellt und durch die Bewegung des Kolbens in den Brennraum 250 gesaugt werden kann, oder aber mit einem erhöhten Ladedruck bereitgestellt werden kann.

Der Kolben 260 oszilliert in dem Brennraum 250, d.h. bewegt sich zyklisch zwischen einem oberen Totpunkt und einem unteren Totpunkt. Diese Bewegung wird durch Verbrennung des Gemisches aus Kraftstoff und Luft in dem Brennraum 250 angetrieben. Typischerweise erfolgt die Verbrennung, während sich der Kolben 260 im Bereich des oberen Totpunkts bewegt. Während der Bewegung des Kolbens 260 von dem oberen Totpunkt zu dem unteren Totpunkt wird typischerweise das Einlassventil 280 geöffnet um Luft in den Brennraum 250 einzulassen. Weiterhin wird während dieser Bewegung typischerweise auch das Abgasrückführungsventil 290 geöffnet und wieder geschlossen, um Abgas in den Brennraum 260 einzulassen. Während der Bewegung des Kolbens 260 von dem unteren Totpunkt zu dem oberen Totpunkt erfolgt eine Verdichtung des Gases in dem Brennraum 250. Der Kraftstoff wird typischerweise gegen Ende der Verdichtungsphase eingespritzt, d.h. wenn sich der Kolben 260 im Bereich des oberen Totpunkts befindet.

Fig. 2A zeigt den Kolben 260 im Bereich des unteren Totpunkts. Fig. 2B zeigt den Kolben 260 in einer Position, welche sich zwischen dem oberen Totpunkt und dem unteren Totpunkt befindet. Die Position von Fig. 2B wird in einer frühen Zyklusphase durchlaufen, wenn sich der Kolben 260 vom oberen Totpunkt in Richtung des unteren Totpunkts bewegt, und wird in einer späten Zyklusphase durchlaufen, wenn sich der Kolben vom unteren Totpunkt in Richtung des oberen Totpunkts bewegt.

Bei dem dargestellten Ausführungsbeispiel der Erfindung wird der Schließzeitpunkt des Einlassventils 280 gesteuert, um einen effektiven Hubraum einzustellen. Der effektive Hubraum entspricht dem Volumen des Brennraums 250 zum Schließzeitpunkt des Einlassventils 280. Hierbei bedeutet ein Schließzeitpunkt, wenn sich der Kolben 260 im unteren Totpunkt befindet, einen maximalen effektiven Hubraum. Durch Verlagerung des Schließzeitpunkts vom unteren Totpunkt nach spät, d.h.

zu einem Zeitpunkt, nachdem der Kolben 260 den unteren Totpunkt durchlaufen hat, wird der effektive Hubraum verkleinert. In diesem Fall wird bereits in den Brennraum 250 eingelassenes Gas durch das geöffnete Einlassventil 280 wieder aus dem Brennraum 250 herausgedrückt und die für die Verbrennung bereitgestellte Luftmenge somit verringert. Durch Verlagerung des Schließzeitpunkts nach vom unteren Totpunkt nach früh, d.h. zu einem Zeitpunkt, bevor der Kolben 260 den unteren Totpunkt durchlaufen hat, wird der effektive Hubraum ebenfalls verkleinert. In diesem Fall begrenzt das frühe Schließen des Einlassventils 280 die dem Brennraum 250 zugeführte Luftmenge, welche schließlich für die Verbrennung zur Verfügung steht.

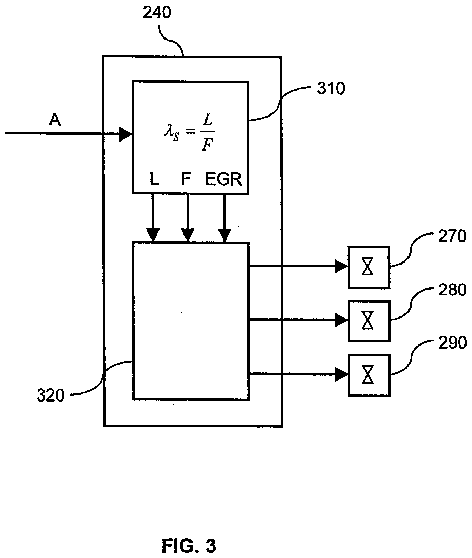

Im vorliegenden Fall beinhaltet die Motorsteuerung 240 einen Regelmechanismus, welcher ein Verhältnis der für die Verbrennung bereitgestellten Luftmenge zu einer Füllmenge des eingespritzten Kraftstoffs, im Folgenden auch als Luftverhältnis $\lambda$ bezeichnet, als Führungsgröße verwendet. Weiterhin werden im Folgenden die Luftmenge mit L, die Füllmenge des Kraftstoffs mit F und die Abgasrückführungsrate mit EGR bezeichnet. Der Regelmechanismus verwendet als Stellgröße den Schließzeitpunkt des Einlassventils 280. Der Regelmechanismus ermöglicht somit, die Luftmenge L an die Füllmenge F des Kraftstoffes anzupassen, z.B. bei Laständerungen. Eine entsprechende Implementierung der Motorsteuerung 240 ist in Fig. 3 veranschaulicht.

Wie in Fig. 3 dargestellt beinhaltet die Motorsteuerung 240 ein Befüllungsmodul 310 und ein Steuerungsmodul 320. Das Befüllungsmodul 310 ist dazu ausgestaltet, die Füllmenge F des in den Brennraum 250 einzuspritzenden Kraftstoffs zu bestimmen. Dies kann beispielsweise anhand einer Lastanforderung A über ein Gaspedal des Kraftfahrzeugs 100 erfolgen. Typischerweise wird bei einer hohen Lastanforderung A eine entsprechend hohe Füllmenge F gewählt und bei einer geringen Lastanforderung A eine entsprechend niedrige Füllmenge F gewählt. Weiterhin ist das Befüllungsmodul 310 dazu ausgestaltet, die für die Verbrennung bereitzustellende Luftmenge L derart zu bestimmen, dass ein Sollwert $\lambda_S$ für das Luftverhältnis $\lambda$ erreicht wird. Dies kann gemäß der Beziehung

$$\lambda_S = \frac{L}{F}$$

erfolgen.

Der Sollwert $\lambda_S$ kann beispielsweise im Bereich von 1,4 bis 1,6 liegen, so dass eine rußarme Verbrennung gewährleistet ist. Darüber hinaus kann das Befüllungsmodul 310 auch dazu ausgestaltet sein eine für eine effiziente Verbrennung geeignete Abgasrückführungsrate EGR zu bestimmen.

Das Steuerungsmodul 320 ist dazu ausgestaltet ist, den Schließzeitpunkt des Einlassventils 280 abhängig von der bestimmten Luftmenge L zu steuern. Insbesondere kann im Falle einer hohen bestimmten Luftmenge L der Schließzeitpunkt in Richtung des unteren Totpunkts verlagert werden, so dass der effektive Hubraum vergrößert wird, wohingegen im Falle einer geringen bestimmten Luftmenge L der Schließzeitpunkt in Richtung des oberen Totpunkts verlagert werden kann, so dass der effektive Hubraum verkleinert wird. Der Stellbereich des Schließzeitpunkts kann dabei vor dem unteren Totpunkt oder nach dem unteren Totpunkt liegen. Weiterhin kann, wie in Fig. 3 dargestellt, das Steuerungsmodul 320 auch dazu ausgestaltet sein das Einspritzventil 270 in Abhängigkeit der bestimmten Füllmenge F zu steuern und/oder das Abgasrückführventil 290 zu steuern, um eine von dem Befüllungsmodul 310 bestimmte Abgasrückführungsrate EGR einzustellen. Die Steuerung der Ventile 270, 280 und/oder 290 kann über einen geeigneten Stellmechanismus erfolgen, z.B. über eine mit einem hydraulischen Phasensteller versehene Nockenwelle oder über eine direkte elektromechanische Ventilsteuerung.

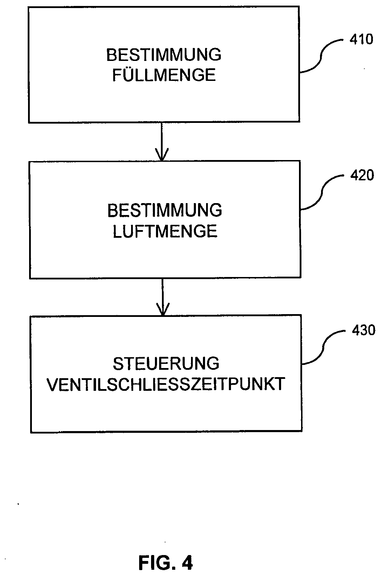

Fig. 4 zeigt ein Flussdiagramm zur Veranschaulichung eines erfindungsgemäßen Verfahrens zur Steuerung des Dieselmotors 220, welches auf den zuvor beschriebenen Konzepten beruht. Das Verfahren kann mittels der anhand von Fig. 1-3 erläuterten Motorsteuerung 240 durchgeführt werden.

Bei Schritt 410 erfolgt eine Füllmengenbestimmung, d.h. die Füllmenge F des in den Brennraum 250 einzuspritzenden Kraftstoffs wird bestimmt. Dies kann beispielsweise anhand der Lastanforderung A erfolgen.

Bei Schritt 420 wird abhängig von der bestimmten Füllmenge F eine für die Verbrennung bereitzustellende Luftmenge L bestimmt. Dies erfolgt auf solche Weise, dass ein Sollwert $\lambda_S$ für das Luftverhältnis $\lambda$ erreicht wird. Der Sollwert $\lambda_S$ ist vorzugsweise derart gewählt, dass eine rußarme Verbrennung gewährleistet ist.

Bei Schritt 430 wird der Schließzeitpunkt des Einlassventils 280 in Abhängigkeit von der bestimmten Luftmenge L gesteuert. Dies erfolgt auf solche Weise, dass eine Annäherung des tatsächlichen Luftverhältnisses $\lambda$ an den Sollwert $\lambda_S$ erfolgt. Der Stellbereich für den Schließzeitpunkt kann nach dem unteren Totpunkt liegen. Alternativ kann der Stellbereich für den Schließzeitpunkt auch vor dem unteren Totpunkt liegen. Somit kann bei einer Erhöhung der Füllmenge F der Schließzeitpunkt des Einlassventils in Richtung des Zeitpunkts verlagert werden, an welchem der Kolben 260 den unteren Totpunkt durchläuft. Ebenso kann bei einer Verringerung der Füllmenge F der Schließzeitpunkt des Einlassventils in Richtung des Zeitpunkts verlagert werden, an welchem der Kolben 260 den oberen Totpunkt durchläuft.

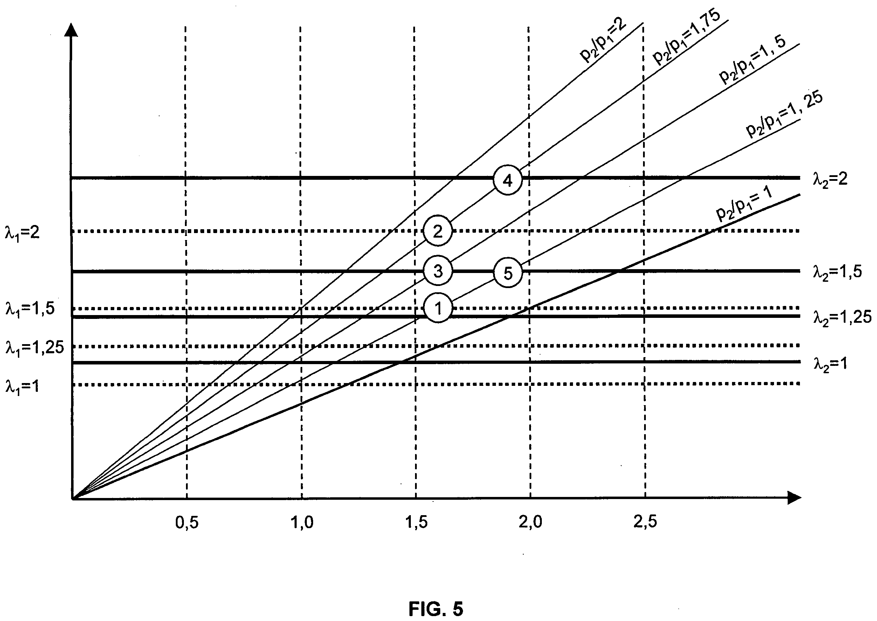

Fig. 5 zeigt ein Diagramm zur beispielhaften Erläuterung der Arbeitsweise der anhand von Fig. 1 bis 4 beschriebenen Ventilsteuerung. Die vertikale Achse des Diagramms von Fig. 5 bezieht sich auf die für die Verbrennung bereitgestellte Luftmenge L, wohingegen sich die horizontale Achse auf den effektiven Hubraum bezieht. Der effektive Hubraum über den Schließzeitpunkt des Einlassventils 280 ist einstellbar. Insbesondere kann der effektive Hubraum wie oben erläutert durch eine Verlagerung des Schließzeitpunkts in Richtung des unteren Totpunkts vergrößert werden und durch eine Verlagerung des Schließzeitpunkts in Richtung des oberen Totpunkts verkleinert werden.

Vom Ursprung des Diagramms aus schräg nach oben verlaufende Geraden veranschaulichen das Ladeverhalten für verschiedene Ladedrücke $p_2/p_1=1$, $p_2/p_1=1{,}25$, $p_2/p_1=1{,}5$, $p_2/p_1=1{,}75$ und $p_2/p_1=2$, angegeben als Verhältnis des Drucks $p_2$, mit welchem die über das Einlassventil 280 zugeführte Luft bereitgestellt wird, zum Normaldruck $p_1$. Hierbei entspricht der Ladedruck $p_2/p_1=1$ der Schlucklinie eines idealen Saugmotors. Anhand der Verläufe der Geraden für die verschiedenen Ladedrücke ist zu erkennen, dass für ein gegebenes Volumen des effektiven Hubraums mit steigendem Ladedruck auch die bereitgestellte Luftmenge L ansteigt.

Das Diagramm von Fig. 5 bezieht sich auf ein Szenario, bei welchem ein Lastsprung von niedriger auf erhöhte Last erfolgt. Die erhöhte Last bedeutet dabei insbesondere eine gegenüber der niedrigen Last erhöhte Füllmenge F des Kraftstoffes. Für die niedrige Last sind in dem Diagramm dargestellte beispielhafte Luftverhältnisse mit $\lambda_1$ bezeichnet und durch gepunktete horizontale Linien dargestellt. Für die erhöhte Last sind in dem Diagramm dargestellte beispielhafte Luftverhältnisse mit $\lambda_2$ bezeichnet und durch durchgezogene horizontale Linien dargestellt.

Ein Ausgangspunkt für den Lastsprung ist in dem Diagramm mit "1" bezeichnet. Wie dargestellt, entspricht der Ausgangspunkt einem Ladedruck von ca. $p_2/p_1=1{,}25$, verbunden mit einem Luftverhältnis von ungefähr $\lambda_1=1{,}5$. Weiterhin wird davon ausgegangen, dass der Ausgangspunkt "1" mit einer gegebenen Abgasrückführungsrate verbunden ist, um das Emissionsverhalten des Dieselmotors 220 zu verbessern. Zur Veranschaulichung der Abgasrückführung ist in dem Diagramm ein mit "2" bezeichneter Punkt dargestellt, welcher dem Ausgangspunkt "1" ohne Abgasrückführung entspricht. Es ist zu erkennen, dass in dem Punkt "2" das Luftverhältnis auf $\lambda_1=2$ erhöht ist. Die Differenz zwischen den Punkten "1" und "2" in der vertikalen Richtung entspricht der Abgasrückführungsrate.

Bei der mit dem Lastsprung einhergehenden Erhöhung der Füllmenge würde sich ohne die im Vorangegangenen beschriebene Steuerung des Schließzeitpunkts des Einlassventils 280 eine Verringerung des Luftverhältnisses von ungefähr $\lambda_1=1{,}5$ auf ungefähr $\lambda_2=1{,}3$ ergeben, wodurch es zu einer vermehrten Rußbildung kommen kann. Der Verringerung des Luftverhältnisses könnte, wie in dem Diagramm durch einen Punkt "3" veranschaulicht, durch eine Rücknahme der Abgasrückführrate entgegengewirkt werden, was typischerweise jedoch eine Verschlechterung des Emissionsverhaltens, insbesondere einen Anstieg des Stickoxidausstoßes, bewirkt. Weiterhin könnte auch eine Anhebung des Ladedrucks genutzt werden, um der Verringerung des Luftverhältnisses entgegenzuwirken. Diese ist typischerweise jedoch nur mit einer gewissen Verzögerung möglich.

Mit der hierin vorgeschlagenen Steuerung des Schließzeitpunkts des Einlassventils 280 kann jedoch die für die Verbrennung bereitgestellte Luftmenge L im selben Verbrennungszyklus an die geänderte Füllmenge F des Kraftstoffs angepasst werden, indem der effektive Hubraum vergrößert wird. Beispielsweise kann hierzu der Schließzeitpunkt aus einer moderaten Spätlage nach dem unteren Totpunkt in Richtung des unteren Totpunkts verlagert werden. Alternativ kann der Schließzeitpunkt aus einer moderaten Frühlage vor dem unteren Totpunkt in Richtung des unteren Totpunkts verlagert werden. Der sich in diesem Fall ergebende Endpunkt des Lastsprungs ist in dem Diagramm mit "5" bezeichnet. Es ist zu erkennen, dass der Endpunkt "5" das gleiche Luftverhältnis $\lambda_2 = 1{,}5$ aufweist wie der Ausgangspunkt "1". Ein mit "4" bezeichneter Punkt, in welchem das Luftverhältnis auf $\lambda_2 = 2$ erhöht ist, entspricht dem Endpunkt "5" ohne Abgasrückführung. Es ist zu erkennen, dass die Abgasrückführungsrate im Vergleich zum Ausgangspunkt "1" im Wesentlichen konstant bleibt. Insbesondere ist mit der Erhöhung der Füllmenge F keine Verringerung der Abgasrückführungsrate verbunden. Vielmehr kann die Abgasrückführrate indem Endpunkt "5" gegenüber dem Ausgangspunkt "1" sogar leicht erhöht sein, um eine Anpassung an die erhöhte Luftmenge und Füllmenge F des Kraftstoffs zu ermöglichen. Weiterhin kann auch der Ladedruck beibehalten werden.

Fig. 5 zeigt somit, dass die hierin beschriebene Steuerung des Schließzeitpunkts des Einlassventils 280 auf effiziente Weise eingesetzt werden kann, um einen Lastsprung emissionsneutral durchzuführen. Zu diesem Zweck sind ein möglichst großer Verstellbereich für den Schließzeitpunkt des Einlassventils und/oder eine zyklusgenaue Einstellbarkeit des Schließzeitpunkts von Vorteil.

Es versteht sich, dass in dem dargestellten Konzepten verschiedene Modifikationen möglich sind. So sind die Konzepte beispielsweise nicht auf den Einsatz in Kraftfahrzeugen beschränkt.

**Patentansprüche**

1. Verfahren zur Steuerung eines Dieselmotors (220), umfassend:

- Bestimmen einer Füllmenge (F) eines in einen Brennraum (250) des Dieselmotors (220) einzuspritzenden Kraftstoffs;
- abhängig von der bestimmten Füllmenge (F) des Kraftstoffs, Bestimmen einer für die Verbrennung bereitzustellenden Luftmenge (L), um einen Sollwert ($\lambda_S$) für ein Verhältnis der Luftmenge (L) zu der Füllmenge (F) des Kraftstoffs zu erreichen; und

- Steuerung eines Schließzeitpunkts eines Einlassventils (280) zur Zuführung von Luft in den Brennraum (250) abhängig von der bestimmten Luftmenge (L),

**dadurch gekennzeichnet, dass** während eines Lastsprungs, der durch eine zunehmende Füllmenge (F) des einzuspritzenden Kraftstoffs bei konstantem Ladedruck gekennzeichnet ist, der Soll-Wert ($\lambda_S$) für das Verhältnis der Luftmenge (L) zu der Füllmenge (F) durch ein Vergrößern des effektiven Hubraums konstant gehalten wird, wobei der effektive Hubraum dem Volumen des Brennraums (250) zum Schließzeitpunkt des Einlassventils (280) entspricht.

2. Verfahren nach Anspruch 1,
wobei der Dieselmotor einen Kolben (260) umfasst, welcher in dem Brennraum (250) zwischen einem oberen Totpunkt und einem unteren Totpunkt oszilliert, und
wobei ein Stellbereich für den Schließzeitpunkt nach einem unteren Totpunkt liegt.

3. Verfahren nach Anspruch 1,
wobei der Dieselmotor einen Kolben (260) umfasst, welcher in dem Brennraum (250) zwischen einem oberen Totpunkt und einem unteren Totpunkt oszilliert, und
wobei ein Stellbereich für den Schließzeitpunkt vor einem unteren Totpunkt liegt.

4. Verfahren nach Anspruch 2 oder 3,
wobei bei einer Erhöhung der Füllmenge (F) des Kraftstoffs der Schließzeitpunkt des Einlassventils (280) in Richtung des Zeitpunkts verlagert wird, an welchem der Kolben (260) den unteren Totpunkt durchläuft.

5. Verfahren nach Anspruch nach einem der vorhergehenden Ansprüche,
wobei darüber hinaus Abgas in den Brennraum (250) zurückgeführt wird.

6. Verfahren nach Anspruch 5,
wobei eine Rate der Rückführung des Abgases in den Brennraum (250) sich bei einer Erhöhung der Füllmenge (F) des Kraftstoffs nicht verringert.

7. Vorrichtung zur Steuerung eines Dieselmotors (220), umfassend:

ein Befüllungsmodul (310), welches dazu ausgestaltet ist, eine Füllmenge (F) eines in einen Brennraum (250) des Dieselmotors (220) einzuspritzenden Kraftstoffs zu bestimmen und abhängig von der bestimmten Füllmenge (F) des Kraftstoffs eine für die Verbrennung bereitzustellende Luftmenge (L) zu bestimmen, um ei-

nen Sollwert ($\lambda_S$) für ein Verhältnis der Luftmenge (L) zu der Füllmenge (F) des Kraftstoffs zu erreichen; und
ein Steuerungsmodul (320), welches dazu ausgestaltet ist, einen Schließzeitpunkt eines Einlassventils (280) zur Zuführung der Luft in den Brennraum (250) abhängig von der bestimmten Luftmenge (L) zu steuern,
**dadurch gekennzeichnet, dass** während eines Lastsprungs, der durch eine zunehmende Füllmenge (F) des einzuspritzenden Kraftstoffs bei konstantem Ladedruck gekennzeichnet ist, mittels des Steuerungsmoduls (320) der Soll-Wert ($\lambda_S$) für das Verhältnis der Luftmenge (L) zu der Füllmenge (F) durch ein Vergrößern des effektiven Hubraums konstant gehalten wird, wobei der effektive Hubraum dem Volumen des Brennraums (250) zum Schließzeitpunkt des Einlassventils (280) entspricht.

8. Vorrichtung nach Anspruch 7,
wobei die Vorrichtung zur Durchführung des Verfahrens nach einem der Ansprüche 1 bis 6 ausgestaltet ist.

9. Kraftfahrzeug (100), umfassend:

einen Antriebsstrang (200) mit einem Dieselmotor (220); und
eine Vorrichtung (240) zur Steuerung des Dieselmotors (220), welche nach Anspruch 7 oder 8 ausgestaltet ist.

**Claims**

1. Method for controlling a diesel engine (220), comprising:

- determining a charge quantity (F) of a fuel for injection into a combustion chamber (250) of the diesel engine (220);
- determining, in a manner dependent on the determined charge quantity (F) of the fuel, an air quantity (L) to be provided for the combustion in order to attain a setpoint value ($\lambda_S$) for a ratio of the air quantity (L) to the charge quantity (F) of the fuel; and
- controlling a closing time of an inlet valve (280) for the supply of air into the combustion chamber (250) in a manner dependent on the determined air quantity (L),

**characterized in that**, during a step change in load which is **characterized by** an increasing charge quantity (F) of the fuel to be injected in the case of a constant charge pressure, the setpoint value ($\lambda_S$) for the ratio of the air quantity (L) to the charge quantity (F) is kept constant by means of an enlargement of the effective swept volume, wherein the effective swept volume corresponds to the volume of the combustion chamber (250) at the closing time of the inlet valve (280).

2. Method according to Claim 1, wherein the diesel engine comprises a piston (260) which oscillates in the combustion chamber (250) between a top dead centre and a bottom dead centre, and wherein an adjustment range for the closing time lies after a bottom dead centre.

3. Method according to Claim 1, wherein the diesel engine comprises a piston (260) which oscillates in the combustion chamber (250) between a top dead centre and a bottom dead centre, and wherein an adjustment range for the closing time lies before a bottom dead centre.

4. Method according to Claim 2 or 3,
wherein, in the event of an increase of the charge quantity (F) of the fuel, the closing time of the inlet valve (280) is shifted in the direction of the time at which the piston (260) passes through the bottom dead centre.

5. Method according to Claim according to one of the preceding claims,
wherein, furthermore, exhaust gas is recirculated into the combustion chamber (250).

6. Method according to Claim 5,
wherein a rate of the recirculation of the exhaust gas into the combustion chamber (250) does not decrease in the event of an increase of the charge quantity (F) of the fuel.

7. Device for controlling a diesel engine (220), comprising:

a charging module (310) which is designed for determining a charge quantity (F) of a fuel for injection into a combustion chamber (250) of the diesel engine (220) and for determining, in a manner dependent on the determined charge quantity (F) of the fuel, an air quantity (L) to be provided for the combustion in order to attain a setpoint value ($\lambda_S$) for a ratio of the air quantity (L) to the charge quantity (F) of the fuel; and
a control module (320) which is designed for controlling a closing time of an inlet valve (280) for the supply of air into the combustion chamber (250) in a manner dependent on the determined air quantity (L),
**characterized in that**, during a step change in load which is **characterized by** an increasing charge quantity (F) of the fuel to be injected in the case of a constant charge pressure, the set-point value ($\lambda_S$) for the ratio of the air quantity (L) to the charge quantity (F) is, by means of the control module (320), kept constant by means of an enlargement of the effective swept volume, wherein the effective swept volume corresponds to the volume of the combustion chamber (250) at the closing time of the inlet valve (280) .

**8.** Device according to Claim 7,
wherein the device is designed for carrying out the method according to one of Claims 1 to 6.

**9.** Motor vehicle (100), comprising:

a drivetrain (200) with a diesel engine (220); and
a device (240) for controlling the diesel engine (220), which device is configured according to Claim 7 or 8.

**Revendications**

**1.** Procédé pour commander un moteur diesel (220), comprenant :

- détermination d'un volume de remplissage (F) d'un carburant à injecter dans une chambre de combustion (250) du moteur diesel (220) ;
- suivant le volume de remplissage (F) déterminé du carburant, détermination d'un volume d'air (L) à mettre à disposition pour la combustion afin d'atteindre une valeur de consigne ($\lambda_S$) pour un rapport entre le volume d'air (L) et le volume de remplissage (F) du carburant ; et
- commande d'un moment de fermeture d'une soupape d'admission (280) servant à l'acheminement de l'air dans la chambre de combustion (250) en fonction du volume d'air (L) déterminé,

**caractérisé en ce que** pendant un saut de charge, lequel est **caractérisé par** une augmentation du volume de remplissage (F) du carburant à injecter avec une pression de suralimentation constante, la valeur de consigne ($\lambda_S$) du rapport entre le volume d'air (L) et le volume de remplissage (F) est maintenue constante par une augmentation de la cylindrée effective, la cylindrée effective correspondant au volume de la chambre de combustion (250) au moment de la fermeture de la soupape d'admission (280).

**2.** Procédé selon la revendication 1, le moteur diesel comportant un piston (260) qui oscille dans la chambre de combustion (250) entre un point mort haut et un point mort bas, et une plage de réglage pour le moment de fermeture se trouvant après un point mort bas.

**3.** Procédé selon la revendication 1, le moteur diesel comportant un piston (260) qui oscille dans la chambre de combustion (250) entre un point mort haut et un point mort bas, et une plage de réglage pour le moment de fermeture se trouvant avant un point mort bas.

**4.** Procédé selon la revendication 2 ou 3, le point de fermeture de la soupape d'admission (280), lors d'une augmentation du volume de remplissage (F) du carburant, étant décalé en direction du moment auquel le piston (260) franchit le point mort bas.

**5.** Procédé selon la revendication selon l'une des revendications précédentes, les gaz d'échappement étant en plus recyclés dans la chambre de combustion (250).

**6.** Procédé selon la revendication 5, un taux de recyclage des gaz d'échappement dans la chambre de combustion (250) ne diminuant pas en présence d'une augmentation du volume de remplissage (F) du carburant.

**7.** Dispositif pour commander un moteur diesel (220), comprenant :

un module de remplissage (310) qui est conçu pour déterminer un volume de remplissage (F) d'un carburant à injecter dans une chambre de combustion (250) du moteur diesel (220) et, suivant le volume de remplissage (F) déterminé du carburant, déterminer un volume d'air (L) à mettre à disposition pour la combustion afin d'atteindre une valeur de consigne ($\lambda_S$) pour un rapport entre le volume d'air (L) et le volume de remplissage (F) du carburant ; et
un module de commande (320) qui est conçu pour commander un moment de fermeture d'une soupape d'admission (280) servant à l'acheminement de l'air dans la chambre de combustion (250) en fonction du volume d'air (L) déterminé,
**caractérisé en ce que** pendant un saut de charge, lequel est **caractérisé par** une augmentation du volume de remplissage (F) du carburant à injecter avec une pression de suralimentation constante, la valeur de consigne ($\lambda_S$) du rapport entre le volume d'air (L) et le volume de remplissage (F) est maintenue constante au moyen du module de commande (320) par une augmentation de la cylindrée effective, la cylindrée effective correspondant au volume de la chambre de combustion (250) au moment de la fermeture de la soupape d'admission (280).

**8.** Dispositif selon la revendication 7, le dispositif étant conçu pour mettre en oeuvre le procédé selon l'une

**EP 2 659 114 B1**

des revendications 1 à 6.

9. Véhicule automobile (100), comprenant :

une chaîne cinématique (200) pourvue d'un moteur diesel (220) ; et
un dispositif (240) pour commander le moteur diesel (220), lequel est conçu selon la revendication 7 ou 8.

FIG. 1

FIG. 2B

FIG. 2A

**FIG. 3**

EP 2 659 114 B1

EP 2 659 114 B1

BESTIMMUNG
FÜLLMENGE — 410

BESTIMMUNG
LUFTMENGE — 420

STEUERUNG
VENTILSCHLIESSZEITPUNKT — 430

**FIG. 4**

**FIG. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008001992 A1
- DE 3930396 A1
- JP 60019943 A
- JP 60032961 A
- DE 10249755 A1
- DE 10344423 A1
- DE 10344428 A1
- DE 102007052615 A1
- DE 102008004361 A1
- DE 102008026323 A1
- DE 10348366 A1
- WO 2006049749 A1
- DE 102008004059 A1
- DE 60301052 T2
- EP 2031216 A2
- WO 2006066739 A1